# EUROPÄISCHE PATENTSCHRIFT

(11) **EP 3 531 087 B1**
(45) Veröffentlichungstag und Bekanntmachung des Hinweises auf die Patenterteilung: **15.04.2020**
(21) Anmeldenummer: 18158098.6
(22) Anmeldetag: 22.02.2018
(51) Int. Cl.: G01G 19/414, G07G 1/00, G06Q 20/20

(54) **WAAGEN-VERBUND**
NETWORK OF SCALES
INTERCONNEXION POUR INSTRUMENT DE PESAGE

(43) Veröffentlichungstag der Anmeldung: 28.08.2019
(73) Patentinhaber: Bizerba SE & Co. KG, 72336 Balingen (DE)
(72) Erfinder: Rohm, Steffen, 72827 Wannweil (DE)
(74) Vertreter: Manitz Finsterwald Patent- und Rechtsanwaltspartnerschaft mbB

(56) Entgegenhaltungen:
- EP-A1- 1 371 955
- EP-A2- 2 138 811
- WO-A1-02/15644
- DE-A1-102011 014 839

## Beschreibung

Die vorliegende Erfindung betrifft einen Verbund von mehreren Waagen, insbesondere Ladenwaagen, wobei die Waagen jeweils eine Eingabeeinrichtung aufweisen, und wobei an jeder Waage ein Verkaufsvorgang durchführbar ist, welcher ein Auflegen eines Produkts auf die Waage, eine Eingabe einer Identifikationsnummer des Produkts und eine Eingabe eines einem jeweiligen Bediener zugeordneten Bedienercodes umfasst.

Ladenwaagen werden oft im Verbund, d.h. in einem Netzwerk, betrieben. Dabei stehen mehrere Waagen an einer Bedientheke, beispielsweise an einer Fleisch-, Wurst- und/oder Käsetheke. Bei einem derartigen Verbund ist ein Durchbedienen eines Kunden möglich, d.h. der Einkauf eines Kunden an der Theke kann an jeder der Waagen im Verbund gestartet, fortgesetzt oder abgeschlossen werden, wobei am Ende lediglich ein einziges Etikett über Gewicht und Preis für alle an der Theke erworbenen Waren und über den zugehörigen Gesamtpreis abgedruckt wird. Die Bediener können also während der Bedienung desselben Kunden die Waagen wechseln, z.B. innerhalb des Fleischbereichs oder vom Fleischbereich hin zum Wurst- oder Käsebereich. Ein derartiger Waagen-Verbund ist beispielsweise aus der EP 1 310 140 A1 oder der WO 2009/010284 A2 bekannt.

Ein typischer Verkaufsvorgang eines Kunden läuft dabei wie folgt ab: Ein Bediener legt zunächst ein von dem Kunden gewünschtes Produkt auf die Lastplatte einer Waage. Anschließend gibt der Bediener eine dem Produkt zugewiesene Identifikationsnummer, insbesondere eine PLU-Nummer, in die Waage ein. Die Waage bestimmt dann das Gewicht und generiert aus dem bestimmten Gewicht, der PLU-Nummer und dem zugeordneten Preis pro Gewicht einen Preis des Produkts. Gleichzeitig fordert die Waage den Bediener auf, sich über einen Bedienercode zu identifizieren. Bei dem Bedienercode kann es sich beispielsweise um einen Zahlencode handeln, der von dem Bediener eingegeben wird, oder die Waage kann auf einem Touchscreen ein Tastenfeld anbieten, wobei jede Taste einem anderen registrierten Bediener zugewiesen ist. Nach Eingabe des Bedienercodes wird der Verkaufsvorgang dem Bediener zugeschrieben, und das Produkt wird in den aktuellen (virtuellen) Warenkorb des Bedieners gelegt. Sind alle Verkaufsvorgänge für einen Kunden beendet, kann der Bediener über eine Abschlusstaste, eine "Total"-Taste oder dergleichen ein Etikett oder einen Bon zu dem Warenkorb für den Kunden ausdrucken.

Nutzt ein Bediener aus Versehen den Zahlencode oder die Bedienertaste eines Kollegen, d.h. eines anderen Bedieners, so wird der aktuelle Wiege- bzw. Verkaufsvorgang dem Warenkorb des Kollegen zugeordnet. Sofern das Versehen nicht auffällt, entsteht die Situation, dass ein Kunde fälschlicherweise ein Produkt eines anderen Kunden mitbezahlt.

Der Erfindung liegt daher die Aufgabe zugrunde, eine Möglichkeit anzugeben, zumindest einige derartige falsche Zuordnungen zu erkennen.

Diese Aufgabe wird durch einen Waagen-Verbund mit dem Merkmalen des Anspruchs 1 gelöst, und insbesondere dadurch, dass der Verbund, insbesondere eine Auswerte- und Steuereinrichtung des Verbunds, dazu ausgebildet ist, bei zwei unmittelbar aufeinander folgenden Verkaufsvorgängen mit demselben Bedienercodes zunächst an einer ersten Waage und anschließend an einer zweiten Waage den zeitlichen Abstand zwischen den beiden Verkaufsvorgängen zu erfassen und mit einem vorgegebenen Schwellwert zu vergleichen, und eine vorgegebene Reaktion des Verbunds auszulösen, wenn der erfasste zeitliche Abstand gleich oder kleiner als der Schwellwert ist.

Da bei einem Verbund aus mehreren Waagen die Waagen in einem gewissen räumlichen Abstand voneinander aufgestellt sind, benötigt ein Bediener eine gewisse Zeit, um von einer Waage zu einer anderen Waage zu gelangen. War ein Bediener gerade eben noch an der einen Waage aktiv und wird sein Bedienercode innerhalb eines Zeitraums, der nicht ausreichend ist, um von der einen zu der anderen Waage zu gelangen, an der anderen Waage eingegeben, kann in der Regel davon ausgegangen werden, dass ein anderer Bediener den Bedienercode des einen Bedieners an der anderen Waage eingegeben hat, d.h. dass der andere Bediener einen falschen Bedienercode benutzt hat. Die vorliegende Erfindung ermöglicht damit eine Plausibilitätsprüfung, bei der zumindest einige der falschen Zuordnungen erkannt werden können.

Die Auswerte- und Steuereinrichtung des Verbunds kann als verteilte Auswerte- und Steuereinrichtung ausgebildet sein und/oder pro Waage eine lokale Auswerte- und Steuereinheit umfassen, die untereinander und/oder mit einer übergeordneten Auswerte- und Steuereinheit des Verbunds verbunden sind.

Bevorzugt entspricht der zeitliche Abstand der Zeitdifferenz zwischen der in der Regel einen Verkaufsvorgang beendenden Eingabe des Bedienercodes an der ersten Waage und dem Auflegen des Produkts auf die zweite Waage, welcher Schritt bei einem nachfolgenden Verkaufsvorgang in der Regel als Erster erfolgt. Grundsätzlich gilt, dass dem zeitlichen Abstand ein vorgegebener Zeitpunkt des Verkaufsvorgangs an der ersten Waage und ein vorgegebener Zeitpunkt des Verkaufsvorgangs an der zweiten Waage zugrunde gelegt werden kann, wobei der vorgegebene Zeitpunkt des Verkaufsvorgangs an der ersten Waage dem Zeitpunkt des Auflegens des Produkts auf die erste Waage, der Eingabe der Identifikationsnummer des Produkts oder der Eingabe des Bedienercodes entspricht oder hiervon abgeleitet ist, und/oder wobei der vorgegebene Zeitpunkt des Verkaufsvorgangs an der zweiten Waage dem Zeitpunkt des Auflegens des Produkts auf die zweite Waage, der Eingabe der Identifikationsnummer des Produkts oder der Eingabe des Bedienercodes entspricht oder hiervon abgeleitet ist.

Bevorzugt weisen die Waagen jeweils eine Ausgabeeinrichtung, insbesondere Anzeigeeinrichtung, auf, und die vorgegebene Reaktion des Verbunds umfasst die Ausgabe, insbesondere Anzeige, eines Hinweises, insbesondere einer Fehlermeldung, an der zweiten Waage. Grundsätzlich kann der Hinweis aber auch akustisch ausgegeben werden. Alternativ oder zusätzlich zu der Ausgabe eines Hinweises kann die vorgegebene Reaktion umfassen, dass die Eingabe des Bedienercodes an der zweiten Waage von dem Verbund zumindest vorerst nicht verarbeitet wird. Insbesondere besteht dann die Möglichkeit, zunächst zu klären, ob tatsächlich ein falscher Bedienercode eingegeben wurde.

Wie aus den vorstehenden Erläuterungen ersichtlich ist, kann der Schwellwert einer Zeitspanne entsprechen, von der angenommen wird, dass ein Bediener mindestens diese Zeitspanne benötigt, um von der ersten Waage zu der zweiten Waage zu gelangen. Der Schwellwert kann jedoch auch derart bemessen sein, dass er einer Zeitspanne entspricht, von der angenommen wird, dass ein Bediener mindestens diese Zeitspanne benötigt, um zwischen zwei Verkaufsvorgängen an zwei unterschiedlichen Waagen zusätzlich eine bestimmte Handlung vorzunehmen, z.B. Händewaschen, wie es beispielsweise bei einem Wechsel von dem Fleischbereich zu dem Käsebereich erforderlich sein kann. Darüber hinaus kann bei bestimmten Produkten immer ein Händewaschen angezeigt sein, sei es nach dem Verkauf und/oder vor dem Verkauf. Der zugehörige Schwellwert liegt dann höher als der zuerst genannte, standardmäßige Schwellwert. Nach einer Ausführungsform der Erfindung kann daher vorgesehen sein, dass der Verbund, insbesondere die vorgenannte Auswerte- und Steuereinrichtung des Verbunds, dazu ausgebildet ist, den vorgegebenen Schwellwert in Abhängigkeit von der an der ersten Waage eingegebenen Produkt-Identifikationsnummer und/oder der an der zweiten Waage eingegebenen Produkt-Identifikationsnummer automatisch zu verändern, insbesondere von einem Standardschwellwert auf einen höheren Schwellwert. Insbesondere kann dabei vorgesehen sein, dass der Verbund, insbesondere die vorgenannte Auswerte- und Steuereinrichtung des Verbunds, dazu ausgebildet ist, bei dem höheren Schwellwert eine andere vorgegebene Reaktion als bei dem Standardschwellwert auszulösen. Beispielsweise kann die vorgegebene Reaktion bei dem höheren Schwellwert die Ausgabe eines Hinweises umfassen, dass eine erforderliche Handlung nicht vorgenommen wurde.

Darüber hinaus kann der Verbund, insbesondere die vorgenannte Auswerte- und Steuereinrichtung des Verbunds, dazu ausgebildet sein, zu überwachen, ob innerhalb eines vorgegebenen Zeitraums nach Beendigung eines Verkaufsvorgangs für einen Kunden ein weiterer Verkaufsvorgang mit demselben Bedienercode für den Kunden oder ein Abschluss der Bedienung des Kunden, insbesondere durch Drücken einer "Total"-Taste oder dergleichen, erfolgt. Hierdurch kann festgestellt werden, ob ein Verkaufsvorgang vergessen wurde. Insbesondere kann der Verbund, insbesondere die vorgenannte Auswerte- und Steuereinrichtung des Verbunds, dazu ausgebildet sein, bei Überschreiten des vorgegebenen Zeitraums bei der nächsten Eingabe des Bedienercodes an einer Waage einen entsprechenden Hinweis an der Waage auszugeben, insbesondere anzuzeigen.

Gemäß einer Ausführungsform der Erfindung weisen die Waagen neben der Eingabeeinrichtung zur Eingabe des Bedienercodes jeweils eine weitere Erkennungseinrichtung auf, mit der der jeweilige Bediener automatisch identifizierbar ist, wobei die Waagen jeweils dazu ausgebildet sind, den bei einem Verkaufsvorgang eingegebenen Bedienercode mittels der weiteren Erkennungseinrichtung zu verifizieren. Hierdurch kann die Robustheit der Erkennung falscher Zuordnungen erhöht werden. Beispielsweise kann es sich bei der weiteren Erkennungseinrichtung um eine biometrische Erkennungseinrichtung, beispielsweise ein Kamerasystem, insbesondere zur Gesichtserkennung, oder ein RF-ID-Lesegerät für von den Bedienern mitgeführte RF-ID-Sender oder -Transponder handeln.

Die vorliegende Erfindung betrifft ferner ein Verfahren zum Betrieb eines Verbunds von mehreren Waagen, insbesondere Ladenwaagen, wobei die Waagen jeweils eine Eingabeeinrichtung aufweisen, und wobei an jeder Waage ein Verkaufsvorgang durchführbar ist, welcher ein Auflegen eines Produkts auf die Waage, eine Eingabe einer Identifikationsnummer des Produkts und eine Eingabe eines einem jeweiligen Bediener zugeordneten Bedienercodes umfasst, und wobei bei zwei unmittelbar aufeinander folgenden Verkaufsvorgängen mit demselben Bedienercodes zunächst an einer ersten Waage und anschließend an einer zweiten Waage der zeitliche Abstand zwischen den beiden Verkaufsvorgängen erfasst und mit einem vorgegebenen Schwellwert verglichen wird, und eine vorgegebene Reaktion des Verbunds ausgelöst wird, wenn der erfasste zeitliche Abstand gleich oder kleiner als der Schwellwert ist.

Weiterbildungen des erfindungsgemäßen Verfahrens ergeben sich in analoger Weise aus den Weiterbildungen des erfindungsgemäßen Waagen-Verbunds.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigt, in schematischer Darstellung,

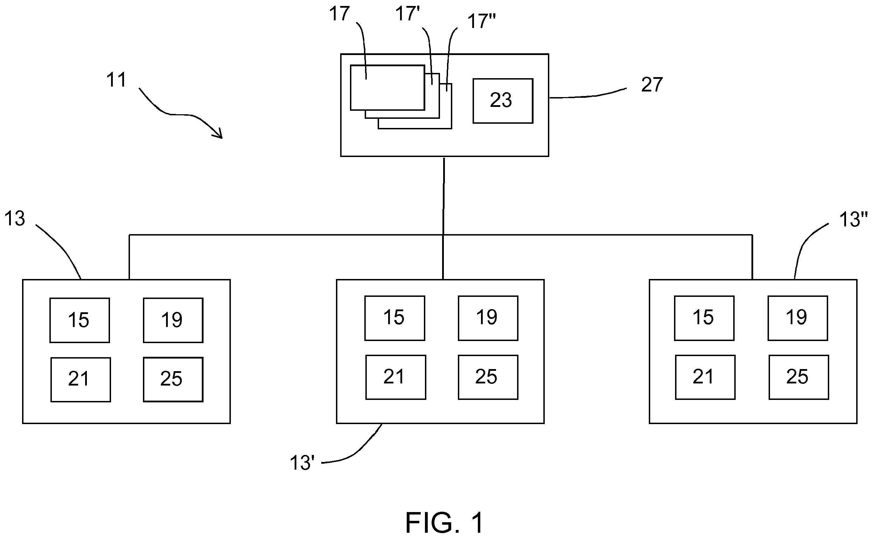

- Fig. 1: einen erfindungsgemäßen Waagen-Verbund.

Der in Fig. 1 gezeigte Waagen-Verbund 11 umfasst mehrere Waagen 13, 13', 13", insbesondere Ladenwaagen, die beispielsweise an einer Fleisch-, Wurst- und/oder Käsetheke in einem Supermarkt aufgestellt und miteinander vernetzt sind. Im Beispiel sind drei Waagen 13 dargestellt, wobei in dem Verbund 11 auch zwei oder mehr als drei Waagen 13 vorhanden sein können. Der Verbund 11 erlaubt einem Bediener, einen Kunden von mehreren Waagen 13 aus zu bedienen, ohne bei einem Waagenwechsel zuvor die Bedienung des Kunden an der zuletzt benutzten Waage 13 beenden zu müssen. Hierzu kann ein Bediener von allen Waagen 13 aus auf seinen virtuellen Warenkorb 17 zugreifen, wobei für jeden Bediener ein eigener Warenkorb 17, 17', 17" vorhanden ist. Zusammengehörige Verkaufsvorgänge für den Kunden können dann gemeinsam, in einem einzigen Druckvorgang am Ende des Bedienvorgangs für den Kunden abgedruckt werden, d.h. es wird ein Durchbedienen des Kunden ermöglicht.

Die Waagen 13 weisen jeweils eine Eingabeeinrichtung 15 auf, durch die nach einem Auflegen eines Produkts auf eine Waage 13 eine zugehörige PLU-Nummer und anschließend ein Bedienercode in die Waage 13 eingegeben werden, wodurch das Produkt in den Warenkorb 17 des Bedieners gelegt wird. Der Bedienercode, der in die Waage 13 eingegeben wird, ist mit einem bestimmten Bediener assoziiert.

Um zu erkennen, falls ein Bediener versehentlich den Bedienercode eines anderen Bedieners verwendet, weist der Waagen-Verbund 11 eine Auswerte- und Steuereinrichtung auf, die dazu ausgebildet, eine Plausibilitätsprüfung durchzuführen. Insbesondere weist die Auswerte- und Steuereinrichtung eine übergeordnete Auswerte- und Steuereinheit 23 auf, und jede der Waagen 13 weist eine lokale Auswerte- und Steuereinheit 25 auf, die jeweils Bestandteil der Auswerte- und Steuereinrichtung des Verbunds 11 sind. Die übergeordnete Auswerte- und Steuereinheit 23 ist mit den lokalen Auswerte- und Steuereinheiten 25 vernetzt und die lokalen Auswerte- und Steuereinheiten 25 sind untereinander vernetzt, insbesondere um die hinsichtlich der Plausibilitätsprüfung erforderlichen Daten austauschen zu können. Die übergeordneten Auswerte- und Steuereinheit 23 ist Bestandteil eines Servers 27 des Verbunds 11 ist, der insbesondere auch die Aufgabe hat, die Warenkörbe 17 der Bediener zu verwalten.

Der Plausibilitätsprüfung liegt zugrunde, dass eine Fehlbedienung erkannt wird, wenn der gleiche Bedienercode zeitgleich oder in innerhalb eines zu kurzen Zeitfensters nacheinander an zwei voneinander beabstandeten Waagen 13 eingeben wird. Da die Waagen 13 voneinander beabstandet angeordnet sind, kann es sich in derartigen Fällen nicht um den gleichen Bediener handeln. Eine Fehlbedienung wird also dann erkannt, wenn ein Bediener einen Verkaufsvorgang an einer Waage 13 abgeschlossen hat und zeitlich danach mit dem gleichen Bedienercode ein Verkaufsvorgang an einer anderen Waage 13 begonnen wird, die Zeit zwischen dem beiden Verkaufsvorgängen aber zu kurz ist, um den Weg von der einen Waage 13 zu der anderen Waage 13 zurückzulegen. Es wird also der zeitliche Abstand zwischen den beiden Verkaufsvorgängen erfasst und mit einem vorgegebenen Schwellwert verglichen. Liegt der erfasste zeitliche Abstand unter dem Schwellwert, wird auf eine Fehlbedienung geschlossen, und es wird auf einer Ausgabeeinrichtung 19 der anderen Waage 13 eine entsprechende Fehlermeldung an den dortigen Bediener ausgegeben.

Eine Fehlbedienung anderer Art wird im Übrigen auch dann erkannt, wenn ein Bediener einen Verkaufsvorgang an einer Waage 13 abgeschlossen hat und zeitlich danach mit dem gleichen Bedienercode ein Verkaufsvorgang an einer anderen Waage 13 begonnen wird, die Zeit dazwischen aber zu kurz ist, um eine übliche Handlung vor oder nach einem Verkaufsvorgang durchzuführen, z. B. Händewaschen. Dies ist an die Bedingung geknüpft, dass das erste Produkt des Bedieners und das zweite Produkt des Bedieners derart zusammenhängen, dass zwischen den beiden Verkaufsvorgängen ein Händewaschen vorgeschrieben ist. Da während des ersten Verkaufsvorgangs und des zweiten Verkaufsvorgangs jeweils neben dem Bedienercode auch eine PLU-Nummer für das entsprechende Produkt eingegeben wird, ist bekannt, ob das erste Produkt und das zweite Produkt einen derartigen Zusammenhang aufweisen, dass dazwischen ein Händewaschen vorgeschrieben ist. In diesem Fall wird nicht auf einen falsch eingegebenen Bedienercode geschlossen, sondern der Bediener wird darauf hingewiesen, dass er sich die Hände waschen muss. Der in diesem Fall verwendete Schwellwert ist dabei höher als der zuvor beschriebene Schwellwert, der lediglich der Zeitspanne entspricht, um von einer Waage zu einer anderen Waage zu kommen.

Darüber hinaus können über die Erfassung des zeitlichen Abstands zwischen zwei Verkaufsvorgängen auch vergessene Verkaufsvorgänge erkannt werden, bei denen der Bedienvorgang über einen zu langen Zeitraum nicht fortgesetzt wird. Zu einem derartigen Bedienerfehler kann bei der nächsten Eingabe des betroffenen Bedienercodes eine entsprechende Meldung ausgegeben werden.

Ferner können die Waagen 13 - unabhängig von der Eingabe eines Bedienercodes - jeweils auch eine weitere Erkennungseinrichtung 21 zur automatischen Identifizierung des jeweiligen Bedieners, z.B. ein Kamerasystem oder ein RF-ID-System aufweisen. Hierdurch kann der bei einem Verkaufsvorgang eingegebene Bedienercode verifiziert werden, wodurch die Robustheit der Bedienererkennung erhöht werden kann.

### Bezuqszeichenliste

- 11: Waagen-Verbund
- 13: Waage
- 15: Eingabeeinrichtung
- 17: Warenkorb
- 19: Ausgabeeinrichtung
- 21: weitere Erkennungseinrichtung
- 23: übergeordnete Auswerte- und Steuereinheit
- 25: lokale Auswerte- und Steuereinheit
- 27: Server

## Patentansprüche

1. Verbund von mehreren Waagen, insbesondere Ladenwaagen, wobei die Waagen (13) jeweils eine Eingabeeinrichtung (15) aufweisen, und wobei an jeder Waage (13) ein Verkaufsvorgang durchführbar ist, welcher ein Auflegen eines Produkts auf die Waage (13), eine Eingabe einer Identifikationsnummer des Produkts und eine Eingabe eines einem jeweiligen Bediener zugeordneten Bedienercodes umfasst,
**dadurch gekennzeichnet, dass**
der Verbund (11) dazu ausgebildet ist, bei zwei unmittelbar aufeinander folgenden Verkaufsvorgängen mit demselben Bedienercode zunächst an einer ersten Waage (13) und anschließend an einer zweiten Waage (13) den zeitlichen Abstand zwischen den beiden Verkaufsvorgängen zu erfassen und mit einem vorgegebenen Schwellwert zu vergleichen, und eine vorgegebene Reaktion des Verbunds (11) auszulösen, wenn der erfasste zeitliche Abstand gleich oder kleiner als der Schwellwert ist.

2. Verbund nach Anspruch 1,
**dadurch gekennzeichnet, dass**
der zeitliche Abstand der Zeitdifferenz zwischen der Eingabe des Bedienercodes an der ersten Waage (13) und dem Auflegen des Produkts auf die zweite Waage (13) entspricht.

3. Verbund nach Anspruch 1 oder 2,
**dadurch gekennzeichnet, dass**
die Waagen (13) jeweils eine Ausgabeeinrichtung (19), insbesondere Anzeigeeinrichtung, aufweisen, und die vorgegebene Reaktion des Verbunds (11) die Ausgabe, insbesondere Anzeige, eines Hinweises, insbesondere einer Fehlermeldung, an der zweiten Waage (13) umfasst.

4. Verbund nach zumindest einem der vorstehenden Ansprüche,
**dadurch gekennzeichnet, dass**
der Verbund (11) dazu ausgebildet ist, den vorgegebenen Schwellwert in Abhängigkeit von der an der ersten Waage (13) eingegebenen Produkt-Identifikationsnummer und/oder der an der zweiten Waage (13) eingegebenen Produkt-Identifikationsnummer automatisch zu verändern, insbesondere von einem Standardschwellwert auf einen höheren Schwellwert.

5. Verbund nach Anspruch 4,
**dadurch gekennzeichnet, dass**
der Verbund (11) dazu ausgebildet ist, bei dem höheren Schwellwert eine andere vorgegebene Reaktion als bei dem Standardschwellwert auszulösen.

6. Verbund nach zumindest einem der vorstehenden Ansprüche,
**dadurch gekennzeichnet, dass**
der Verbund (11) dazu ausgebildet ist, zu überwachen, ob innerhalb eines vorgegebenen Zeitraums nach Beendigung eines Verkaufsvorgangs für einen Kunden ein weiterer Verkaufsvorgang mit demselben Bedienercode für den Kunden oder ein Abschluss der Bedienung des Kunden erfolgt.

7. Verbund nach Anspruch 6,
**dadurch gekennzeichnet, dass**
der Verbund (11) dazu ausgebildet ist, bei Überschreiten des vorgegebenen Zeitraums bei der nächsten Eingabe des Bedienercodes an einer Waage (13) einen entsprechenden Hinweis an der Waage (13) auszugeben, insbesondere anzuzeigen.

8. Verbund nach zumindest einem der vorstehenden Ansprüche,
**dadurch gekennzeichnet, dass**
die Waagen (13) neben der Eingabeeinrichtung (15) zur Eingabe des Bedienercodes jeweils eine weitere Erkennungseinrichtung (21) aufweisen, mit der der jeweilige Bediener automatisch identifizierbar ist, wobei die Waagen (13) jeweils dazu ausgebildet sind, den bei einem Verkaufsvorgang eingegebenen Bedienercode mittels der weiteren Erkennungseinrichtung (21) zu verifizieren.

9. Verbund nach Anspruch 8,
**dadurch gekennzeichnet , dass**
es sich bei der weiteren Erkennungseinrichtung (21) um eine biometrische Erkennungseinrichtung, beispielsweise ein Kamerasystem, insbesondere zur Gesichtserkennung, oder ein RF-ID-Lesegerät für von den Bedienern mitgeführte RF-ID-Sender oder -Transponder handelt.

10. Verfahren zum Betrieb eines Verbunds (11) von mehreren Waagen (13), insbesondere Ladenwaagen, wobei die Waagen (13) jeweils eine Eingabeeinrichtung (15) aufweisen, und wobei an jeder Waage (13) ein Verkaufsvorgang durchführbar ist, welcher ein Auflegen eines Produkts auf die Waage (13), eine Eingabe einer Identifikationsnummer des Produkts und eine Eingabe eines einem jeweiligen Bediener zugeordneten Bedienercodes umfasst,
**dadurch gekennzeichnet, dass**
bei zwei unmittelbar aufeinander folgenden Verkaufsvorgängen mit demselben Bedienercodes zunächst an einer ersten Waage (13) und anschließend an einer zweiten Waage (13) der zeitliche Abstand zwischen den beiden Verkaufsvorgängen erfasst und mit einem vorgegebenen Schwellwert verglichen wird, und eine vorgegebene Reaktion des Verbunds (11) ausgelöst wird, wenn der erfasste zeitliche Abstand gleich oder kleiner als der Schwellwert ist.

## Claims

1. A network of a plurality of scales, in particular store scales, wherein the scales (13) each have an input device (15); and wherein a sales process can be carried out at each scale (13) which comprises placing a product onto the scale (13), inputting an identification number of the product and inputting a user code associated with a respective user,
**characterized in that**,
in the case of two directly consecutive sales processes using the same user code first at a first scale (13) and subsequently at a second scale (13), the network (11) is configured to detect the time interval between the two sales processes and to compare it with a predefined threshold value and to trigger a predefined response of the network (11) if the detected time interval is equal to or smaller than the threshold value.

2. A network in accordance with claim 1,
**characterized in that**
the time interval corresponds to the time difference between the inputting of the user code at the first scale (13) and the placing of the product onto the second scale (13).

3. A network in accordance with claim 1 or claim 2,
**characterized in that**
the scales (13) each have an output device (19), in particular a display device, and the predefined response of the network (11) comprises outputting, in particular displaying, an indication, in particular an error message, at the second scale (13).

4. A network in accordance with at least one of the preceding claims,
**characterized in that**
the network (11) is configured to automatically change the predefined threshold value, in particular from a standard threshold value to a higher threshold value, in dependence on the product identification number input at the first scale (13) and/or on the product identification number input at the second scale (13).

5. A network in accordance with claim 4,
**characterized in that**
the network (11) is configured to trigger a different predefined response at the higher threshold value than at the standard threshold value.

6. A network in accordance with at least one of the preceding claims,
**characterized in that**
the network (11) is configured to monitor whether, within a predefined time period after the end of a sales process for a customer, a further sales process using the same user code for the customer or a completion of the serving of the customer takes place.

7. A network in accordance with claim 6,
**characterized in that**,
if the predefined time period is exceeded, the network (11) is configured to output, in particular to display, a corresponding indication at a scale (13) on the next input of the user code at the scale (13).

8. A network in accordance with at least one of the preceding claims,
**characterized in that**,
in addition to the input device (15) for inputting the user code, the scales (13) each have a further recognition device (21) by which the respective user can be automatically identified, with the scales (13) each being configured to verify the user code that is input in a sales process by means of the further recognition device (21).

9. A network in accordance with claim 8,
**characterized in that**
the further recognition device (21) is a biometric recognition device, for example a camera system, in particular for facial recognition, or an RFID reading device for RFID transmitters or RFID transponders taken along by the users.

10. A method of operating a network (11) of a plurality of scales (13), in particular store scales, wherein the scales (13) each have an input device (15); and wherein a sales process can be carried out at each scale (13) which comprises placing a product onto the scale (13), inputting an identification number of the product and inputting a user code associated with a respective user,
**characterized in that**,
in the case of two directly consecutive sales processes using the same user code first at a first scale (13) and subsequently at a second scale (13), the time interval between the two sales processes is detected and is compared with a predefined threshold value and a predefined response of the network (11) is triggered if the detected time interval is equal to or smaller than the threshold value.

## Revendications

1. Réseau de plusieurs balances, en particulier de balances de magasin, dans lequel
les balances (13) présentent chacune un dispositif de saisie (15), et
une opération de vente peut être effectuée sur chaque balance (13), qui comprend la mise en place d'un produit sur la balance (13), la saisie d'un numéro d'identification du produit et la saisie d'un code opérateur attribué à un opérateur respectif,
**caractérisé en ce que**
dans le cas de deux opérations de vente immédiatement successives avec le même code opérateur tout d'abord sur une première balance (13), puis sur une deuxième balance (13), le réseau (11) est conçu pour enregistrer l'intervalle de temps entre les deux opérations de vente pour le comparer à une valeur seuil prédéterminée, et pour déclencher une réaction prédéterminée du réseau (11) si l'intervalle de temps enregistré est égal ou inférieur à la valeur seuil.

2. Réseau selon la revendication 1,
**caractérisé en ce que**
l'intervalle de temps correspond à la différence de temps entre la saisie du code opérateur sur la première balance (13) et la mise en place du produit sur la deuxième balance (13).

3. Réseau selon la revendication 1 ou 2,
**caractérisé en ce que**
les balances (13) comprennent chacune un dispositif d'indication (19), en particulier un dispositif d'affichage, et la réaction prédéterminée du réseau (11) comprend la sortie, en particulier l'affichage, d'un message, en particulier d'un message d'erreur, sur la deuxième balance (13).

4. Réseau selon l'une au moins des revendications précédentes,
**caractérisé en ce que**
le réseau (11) est réalisé pour modifier automatiquement la valeur seuil prédéterminée en fonction du numéro d'identification de produit saisi sur la première balance (13) et/ou du numéro d'identification de produit saisi sur la deuxième balance (13), en particulier pour la faire passer d'une valeur seuil standard à une valeur seuil plus élevée.

5. Réseau selon la revendication 4,
**caractérisé en ce que**
le réseau (11) est réalisé pour déclencher, à la valeur seuil plus élevée, une autre réaction prédéterminée que celle à la valeur seuil standard.

6. Réseau e selon l'une au moins des revendications précédentes,
**caractérisé en ce que**
le réseau (11) est réalisé pour surveiller si, après l'achèvement d'une opération de vente pour un client, une autre opération de vente avec le même code opérateur pour le client ou une terminaison du service du client est effectuée dans une période de temps prédéterminée.

7. Réseau selon la revendication 6,
**caractérisé en ce que**
en cas de dépassement de la période de temps prédéterminée, le réseau (11) est réalisé pour indiquer, en particulier pour afficher, un message correspondant sur la balance (13) lors de la prochaine saisie du code opérateur sur la balance (13).

8. Réseau selon l'une au moins des revendications précédentes,
**caractérisé en ce que**
les balances (13) comprennent chacune, outre le dispositif de saisie (15) pour saisir le code opérateur, un autre dispositif de reconnaissance (21) permettant d'identifier automatiquement l'opérateur respectif, les balances (13) étant réalisées pour vérifier le code opérateur, saisi lors d'une opération de vente, au moyen de l'autre dispositif de reconnaissance (21).

9. Réseau selon la revendication 8,
**caractérisé en ce que**
l'autre dispositif de reconnaissance (21) est un dispositif de reconnaissance biométrique, par exemple un système de caméra, en particulier pour la reconnaissance des visages, ou un lecteur RF-ID pour des émetteurs ou transpondeurs RF-ID portés par les opérateurs.

10. Procédé pour faire fonctionner un réseau (11) de plusieurs balances (13), en particulier de balances de magasin,
dans lequel
les balances (13) présentent chacune un dispositif de saisie (15), et
une opération de vente peut être effectuée sur chaque balance (13), qui comprend la mise en place d'un produit sur la balance (13), la saisie d'un numéro d'identification du produit et la saisie d'un code opérateur attribué à un opérateur respectif,
**caractérisé en ce que**
dans le cas de deux opérations de vente immédiatement successives avec le même code opérateur tout d'abord sur une première balance (13), puis sur une deuxième balance (13), l'intervalle de temps entre les deux opérations de vente est enregistré il est comparé à une valeur seuil prédéterminée, et une réaction prédéterminée du réseau (11) est déclenchée si l'intervalle de temps enregistré est égal ou inférieur à la valeur seuil.
